Europäisches Patentamt

European Patent Office

Office européen des brevets

(11) Veröffentlichungsnummer: **0 006 964**
A1

# (12) EUROPÄISCHE PATENTANMELDUNG

(21) Anmeldenummer: 79100760.2

(22) Anmeldetag: 14.03.79

(51) Int. Cl.³: **A 01 K 85/00**

(30) Priorität: 23.03.78 CH 3188/78

(43) Veröffentlichungstag der Anmeldung:
23.01.80 Patentblatt 80/2

(84) Benannte Vertragsstaaten:
DE GB

(71) Anmelder: Fischer, Hans
In der Ey 56
CH-8047 Zürich(CH)

(72) Erfinder: Fischer, Hans
In der Ey 56
CH-8047 Zürich(CH)

(54) Fisch-Köder.

(57) Bei der Erfindung handelt es sich um einen Fischköder, der die Eigenschaft besitzt, bei ruhiger Haltung der Angelleine waagrecht im Wasser zu schwimmen. Der Fischköder besteht aus drei Einselteilen, einer transparenten fischförmigen Hülle, einer in diese eingeschobene, gefaltete, farbige und reliefartig geprägten Folie und aus einem als Waagebalken dienenden Draht, der mit seinem einen Ende in die Fischhülle gesteckt wird und am anderen Ende ein dem Gewicht der Hülle mit Folie entsprechendes Gegengewicht aufweist. Die Achse des Waagebalkens ist der Befestigungspunkt für die Angelleine. Die Folie kann, um andere Fische anzulocken, entweder gegen eine andersfarbige in der Hülle ausgewechselt, aber auch für sich alleine an einer Angelleine befestigt durch das Wasser gezogen werden. Der Draht-Waagebalken kann ebenfalls für sich allein verwendet werden, wobei auf sein freies Ende ein anderer, beliebiger, künstlicher oder natürlicher toter Köder gesteckt werden kann.

EP 0 006 964 A1

./...

- 1/1 -

- 1 -

Fisch-Köder

Die Erfindung betrifft einen Fisch-Köder, bestehend aus einer
durchsichtigen, einen fischförmigen Hohlkörper bildenden Kunststoffhülle, worin sich eine metallisch glänzende oder fischartig
farbige und geprägte in der Rücken-Achse links- und rechtsseitig
gefaltete Alu-Folie befindet und der auf einen entsprechend geformten als Waagebalken dienenden Draht aufgesteckt ist, der an
einem Ende ein Gegengewicht aufweist und dessen Schwerpunkt den
Befestigungspunkt für die Angelleine bildet.

Fischköder in Form von Fischen sind bekannt. Sie bestehen meist
aus einem Stück oder aus einzelnen untrennbar miteinander verbundenen Teilen. Bei den herkömmlichen Fisch-Ködern ist der gesamte
Fisch geprägt und farbig bedruckt, so dass die einzelnen Teile
nicht ausgewechselt werden können. Die Fisch-Köder hängen senkrecht im Wasser meist mit dem Kopf nach oben und dem Schwanz nach
unten und nehmen höchstens beim Einholen der Angelleine eine sich
der Waagrechten annähernde Stellung ein.

Wird ein Fischköder so gebaut, dass er nicht mehr in seine Einzelteile zerlegbar ist, so müssen, um die auf verschiedene Farben und
Konturen verschieden ansprechenden Fische zu fangen, jeweils die
ganzen Köder ausgewechselt werden. Eine andere Kombination oder
eine Verwendung eines Bestandteiles des Köders für sich ist unmöglich.

Die senkrechte Stellung der bekannten Fischköder im Wasser ist unnatürlich, lebende Fische schwimmen waagrecht. Um dies nur einigermassen zu erreichen, müssen die Fischköder mit Hilfe der Angelleine eingeholt werden.

Der Erfindung liegt die Aufgabe zugrunde, einen Fisch-Köder zu konstruieren, der in anderweitig einzeln verwendbare Einzelteile zerlegt werden kann, dessen Einzelteile ausgewechselt werden können und der auch bei ruhiger Haltung der Angelleine in waagrechter Lage verharrt.

Erfindungsgemäss wurde dies dadurch erreicht, dass der Fisch-Köder so aus drei Teilen, einem Kunststofffischleib, einer innen liegenden geprägten und farbig bedruckten Alu-Folie und einem als Waagebalken dienenden Draht mit Gegengewicht und Aufhängeoese für die Angelleine zusammengesetzt wird, dass diese leicht trennbar sind und der Fischköder dank dem Gegengewicht in waagrecht schwimmender Lage gehalten werden kann.

Der Fischkörper besteht vorzugsweise aus durchsichtigem Kunststoff, das Fisch-Motiv aus Aluminim-Folie, die Vorrichtung,die den Köder in der Waagrechten hält, aus Stahldraht und das Gegengewicht aus Blei.

Im folgenden wird anhand der beiliegenden Zeichnung ein Ausführungsbeispiel der Erfindung näher beschrieben. Es zeigen

Abbildung 1      einen Längsschnitt
                 und
Abbildung 1a     einen Querschnitt
                 durch den Kunststofffischkörper
Abbildung 2      die ausgestanzte und geprägte Alu-Folie
Abbildung 2a     die in der Längsachse gefaltete Alu-Folie

Abbildung 3    den als Waagebalken dienenden Stahldraht mit der Oese zur Befestigung der Angelleine, der wellenartigen Verformung auf der einen und dem Gegengewicht auf der anderen Seite

Abbildung 4    den gesamten aus den drei Einzelteilen (Fischkörper, Alu-Folie, Waagebalken) zusammengesetzten Fisch-Köder.

Der in der Zeichnung dargestellte Fisch-Köder verfügt über ein in der Schwanzflosse eingelassenes Loch, in dem der Angelhaken befestigt werden kann, sofern er nicht mittels eines kurzen Stücks Angelschnur an der für die Angelleine vorgesehenen Oese festgebunden und im Schlitz des im Beispiel unten offenen Fischkörpers eingeklemmt wird.

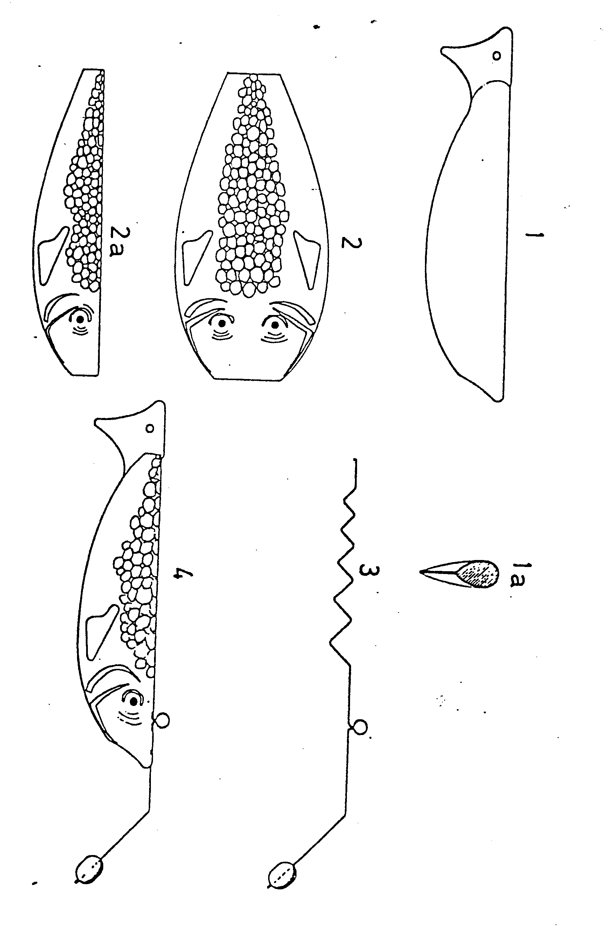

Die Alu-Folie im Beispiel wurde so geprägt, dass die Augen, die Kiemenöffnungen, die Seitenflossen und die Schuppen reliefartig hervorspringen. Die abgebildete Alu-Folie wurde nicht bemalt und stellt so ein silbern glänzendes Fischchen dar. Wird die Alu-Folie in der Längsrichtung symmetrisch gefaltet, so kann sie in den Hohlkörper der unter Abb. 1 und 1a gezeigten fischförmigen Kunststoffhülle geschoben werden.

Der in Abb. 3 gezeigte Draht besteht im Beispiel aus Stahl und das hier wellenförmig geformte Ende wird soweit in das Kunststofffischchen geschoben, bis die Oese, die zum Befestigen der Angelleine dient, in einen Schlitz in der Rückenkante des Kunststofffischchens einrastet.

Das Gegengewicht, das die Aufgabe hat, den Fischköder in der Waagrechten zu halten, besteht im Beispiel aus Blei. Dieses Ende des Drahtes mit dem Gegengewicht ist so nach unten gebogen, dass aufgrund des Hebelgesetzes der ganze Köder, wenn er an der Achse aufgehängt ist, eine waagrechte Haltung einnimmt.

Durch die Möglichkeit, die in die Plastikhülle geschobene Alu-Folie auszuwechseln, werden zwei Vorteile erreicht: Erstens kann je nach der zu fangenden Fischart eine anders bemalte und geprägte Alu-Folie verwendet werden, je nachdem, auf was für Farben, beziehungsweise auf welche Farbkomposition ein Fisch am besten anspricht. Zweitens können die einzelnen Alu-Folien einzeln für sich verwendet werden, indem zwei bis drei Stück in der Nähe des Angels an der Angelleine befestigt werden, um die Fische auf diese Art anzulocken.

Ebenso kann der als Waagebalken dienende Draht mit dem Gegengewicht für sich allein verwendet werden, um auf sein freies und entsprechend verformtes Ende einen beliebigen künstlichen Köder oder einen natürlichen, toten Köder anzustecken.

Daneben hat der ganze aus allen drei Teilen, Kunststoffhülle, Alu-Folie, Waagebalken-Draht genauso wie der Waagebalken-Draht für sich allein mit einem anderen aufgesteckten Köder, den Vorteil, dass er waagrecht im Wasser schwebt und dadurch eine lebensechte, natürliche Haltung einnimmt.

Patentansprüche:

1. Fisch-Köder, bestehend aus einer durchsichtigen, einen fischförmigen Hohlkörper bildenden Kunststoffhülle, worin sich eine metallisch glänzende oder fischartig farbig bedruckte und geprägte in der Rückenachse links- und rechtsseitig gefaltete Alu-Folie befindet, und der auf einen entsprechend geformten als Waagebalken dienenden Draht aufgesteckt ist, der an einem Ende ein Gegengewicht aufweist und dessen Schwerpunkt den Befestigungspunkt für die Angelleine bildet, so dass sich der Fisch-Köder dadurch auszeichnet, dass er im Wasser eine natürliche, schwimmende Haltung einnimmt und dadurch, dass der Waagebalken-Teil und der Alu-Folien-Teil ausgewechselt oder einzeln verwendet werden können.

2. Verwendung des Draht-Waagebalkens mit Gegengewicht für sich, um auf der wellenförmig verformten Seite einen natürlichen toten Fisch-Köder zu stecken.

3. Verwendung der geprägten metallisch glänzenden oder fischfarbig bedruckten Alu-Folie für sich, um an der Fischleine befestigt, beim Einholen derselben im Wasser mit ihren Flatterbewegungen und den dadurch hervorgerufenen Lichtreflexen Fische anzulocken.

1

1a

2

2a

3

4

**Europäisches Patentamt**

## EUROPÄISCHER RECHERCHENBERICHT

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| X | US - A - 3 060 619 (CORNICK) <br> * Spalte 1, Zeile 64 - Spalte 2, Zeile 29; Spalte 2, Zeilen 56-65 * | 1 | A 01 K 85/00 |
| X | US - A - 2 598 011 (PITRE) <br> * Spalte 2, Zeilen 13-45; Spalte 3, Zeilen 39-60 * | 2 | |
| X | US - A - 3 742 639 (BUTTS) <br> * Spalte 1, Zeile 39 - Spalte 2, Zeile 41 * | 2 | RECHERCHIERTE SACHGEBIETE (Int. Cl.²) <br><br> A 01 K |
| | US - A - 3 528 189 (LILLEY) <br> * Spalte 2, Zeilen 21-45; Figuren 1,2 * | 1 | |
| | US - A - 2 599 035 (WING) <br> * Spalte 2, Zeile 13 - Spalte 3, Zeile 22 * | 1 | |
| | US - A - 2 996 826 (LAMAR) <br> * Spalte 2, Zeile 51 - Spalte 3, Zeile 11 * | 1 | KATEGORIE DER GENANNTEN DOKUMENTE <br><br> X: von besonderer Bedeutung |
| | US - A - 2 764 834 (KLEIN) <br> * Spalte 2, Zeilen 21-31 * <br><br> ./. | 1 | A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 18-06-1979 | CRUCHTEN |

EPA form 1503.1 06.78

| Europäisches Patentamt | EUROPÄISCHER RECHERCHENBERICHT | |
|---|---|---|

| | EINSCHLÄGIGE DOKUMENTE | | KLASSIFIKATION DER ANMELDUNG (Int.Cl ) |
|---|---|---|---|
| Kategorie | Kennzeichnung des Dokuments mit Angabe, soweit erforderlich, der maßgeblichen Teile | betrifft Anspruch | |
| | US - A - 3 186 120 (LAYSON)<br><br>* Spalte 2, Zeile 68 - Spalte 3, Zeile 8; Figur 3; Spalte 3, Zeile 65 - Spalte 4, Zeile 12; Figur 10 *<br><br>-- | 3 | |
| X | US - A - 1 921 176 (UNKEFER)<br><br>* Seite 1, Zeilen 24-60 *<br><br>---- | 3 | RECHERCHIERTE SACHGEBIETE (Int. Cl.²) |